# EUROPÄISCHE PATENTSCHRIFT

(11) **EP 1 767 777 B1**
(45) Veröffentlichungstag und Bekanntmachung des Hinweises auf die Patenterteilung: **20.04.2011**
(21) Anmeldenummer: 06019157.4
(22) Anmeldetag: 13.09.2006
(51) Int. Cl.: F02P 23/04

(54) **Verbrennungsmotor mit einer Laserlichterzeugungsvorrichtung**
Combustion engine comprising a laser ignition system
Moteur à combustion muni d'un système d'allumage laser

(30) Priorität: 22.09.2005 AT 15592005
(43) Veröffentlichungstag der Anmeldung: 28.03.2007
(73) Patentinhaber: GE Jenbacher GmbH & Co OHG, 6200 Jenbach (AT)
(72) Erfinder: Kopecek, Herbert, 85399 Hallbergmoos (DE); Iskra, Kurt, 8062 Kumberg (AT); Weinrotter, Martin, 4840 Vöcklabruck (AT); Graf, Josef, 7503 Grosspetersdorf (AT); Klausner, Johann, 6391 St. Jakob i.H. (AT)
(74) Vertreter: Gangl, Markus

(56) Entgegenhaltungen:
- JP-A- 2 170 585
- US-B1- 6 394 788
- "Multi-Pulses Behaviour in a Ebrium Glass LAser Q Switched by Cobalt Spinal" 25. April 2003 (2003-04-25), XP008085892 Orlando Gefunden im Internet: URL:http://www.krige.com/files/er140.pdf>

## Beschreibung

Die vorliegende Erfindung betrifft einen Verbrennungsmotor mit einer Laserlichterzeugungsvorrichtung.

Herkömmliche Laserlichterzeugungsvorrichtungen, welche im Bereich der Laserzündung von Verbrennungsmotoren eingesetzt werden, weisen in der Regel einen Laserresonator auf, welcher derart ausgebildet ist, dass das von der Laserlichterzeugungsvorrichtung abgegebene Laserlicht ein Gauß'sches Profil (TEM₀₀-Modenstruktur) aufweist, das heißt, die Intensitätsverteilung fällt transversal mit einem exponentiellen Verlauf ab. Weiters werden insbesondere bei gepulsten Lasern häufig auch Laserlichterzeugungsvorrichtungen mit instabilem Laserresonator verwendet. Auch bei diesem Resonatorkonzept tritt eine sich transversal verändernde Intensitätsverteilung über den Strahlquerschnitt auf.

Ein wesentliches Hindernis für den massentauglichen Einsatz lasergezündeter Verbrennungsmotoren besteht in der geringen Effizienz, mit der das Laserlicht in das zur sicheren Zündung des Kraftstoff-Luft-Gemisches aufzuheizende Plasmavolumen eingebracht wird. Diese Verluste resultieren einerseits aus den Transmissionsverlusten der Laserstrahlung, die vor dem laserinduzierten Plasmadurchbruch das Zündvolumen passiert, andererseits aus Verlusten, die durch seitliches Passieren der Laserstrahlung des Plasmavolumens aufgrund zu geringer Plasmagröße oder seitlich zu weit ausgedehnter Fokusgeometrie entstehen.

Aufgabe der Erfindung ist es, einen gattungsgemäßen Verbrennungsmotor derart weiter zu entwickeln, dass die Effizienz, mit der das Laserlicht für die Zündung verwendet wird, erhöht wird.

Diese Aufgabe wird durch einen Verbrennungsmotor mit den Merkmalen des Anspruchs 1 gelöst.

Bei einem derartigen Verbrennungsmotor ist es möglich, die zur Erzeugung eines Plasmakernes notwendige Minimalenergie durch Laserstrahlung, welche eine TEM₀₀-Modenstruktur aufweist, in den Brennraum einzubringen. Diese Laserstrahlung weist ideale Fokussierungseigenschaften auf.

Im Weiteren wird die zur Erzeugung eines zündfähigen Flammenkernes notwendige Gesamtenergie in Form eines sich später ausbildenden energiereicheren Laserlichts mit einer Modenstruktur höherer transversaler Ordnung in den Brennraum eingebracht. Dies geschieht erst bei Ausbildung eines genügend großen Plasmavolumens, sodass Verluste aus zeitlich vorab oder räumlich das Plasma seitlich passierender Strahlung minimiert werden.

Im Sinne dieser Offenbarung wird unter einer transversalen Modenstruktur das Intensitätsmuster eines elektromagnetischen Strahls in einer Ebene senkrecht (d. h. transversal) zur Ausbreitungsrichtung des Strahls verstanden. Die durch einen Laserresonator erzeugbaren Modenstrukturen sind vom transversalen elektromagnetischen Typ (TEM).

Je nach Symmetrie des Laserresonators ist die Struktur der TEM-Moden unterschiedlich.

Die TEM₀₀-Mode die Grundmode mit Gauß'schem Profil.

Vorzugsweise werden sowohl das Laserlicht mit TEM₀₀-Modenstruktur als auch das eine Modenstruktur höherer transversaler Ordnung aufweisende Laserlicht in Form von Pulsen abgegeben.

Vorzugsweise werden sowohl das Laserlicht mit TEM₀₀-Modenstruktur als auch das eine Modenstruktur höherer transversaler Ordnung aufweisende Laserlicht mit derselben Laserlichterzeugungsvorrichtung erzeugt. Hierfür muss vorgesehen sein, dass die Laserlichterzeugungsvorrichtung einen Laserresonator aufweist, der derart ausgebildet ist, dass er in Bezug auf wenigstens zwei Moden verschiedener transversaler Ordnung des abgebbaren Laserlichtes stabil betreibbar ist.

Vorzugsweise wird bei der Erfindung ein Laserresonator vom Fabry-Perot-Typ eingesetzt.

Die Bezeichnung "transversal" bezieht sich auf jede Richtung rechtwinklig zur optischen Achse des Laserresonators.

Aus der Literatur ist bekannt, dass bei Lasersystemen mit passiver Güteschaltung durch sättigbare Absorber eine sequentielle Abfolge der Ausbildung unterschiedlicher Modenstrukturen auftreten kann (R. Wu, T.L. Chen, J.D. Myers, M.J. Myers, C. Hardy, Multi-Pulses Behavior in a Erbium Glass laser Q Switched by Cobalt Spinal, AeroSense 2003, SPIE Vol. 5086, Orlando, Floride, April 21-25, 2003).

Es handelt sich hierbei jedoch um nicht geplante, in unterschiedlicher Modenstruktur und mit unbeabsichtigter zeitlicher Reihenfolge auftretende Effekte, deren Ausprägung darüber hinaus nicht auf die für die Erzeugung und Nachheizung eines laserinduzierten zündfähigen Plasmas optimiert ist.

Für die bevorzugte Ausführungsform der Erfindung wird eine Laserlichterzeugungsvorrichtung vorgeschlagen, deren Konfiguration des Laserresonators durch eine geeignete Ausbildung der optischen Oberflächen eine Variabilität der Stabilitätsbedingung des Laserresonators ermöglicht. Diesbezüglich ist vorgesehen, dass die optischen Oberflächen des Laserresonators derart ausgebildet und zueinander angeordnet sind, dass der Strahldurchmesser eines in den Laserresonator eingebrachten Lichtstrahls veränderbar ist. Ein solcher Laserresonator ist auch unter der Bezeichnung "Teleskopresonator" bekannt.

Im Laserresonator einer derartigen Laserlichterzeugungsvorrichtung sind ein Lasermedium und ein passiver sättigbarer Absorber angeordnet, wobei vorzugsweise jeweils eine Oberfläche des Lasermediums und des Absorbers derart ausgebildet und angeordnet ist, dass sie einen Spiegel des Laserresonators bildet. Ganz generell kann vorgesehen sein, dass die optischen Oberflächen des Laserresonators durch die Oberflächen des Lasermediums und des Absorbers gebildet werden.

Alternativ kann natürlich auch eine gesonderte Optik, insbesondere gesonderte Spiegel, vorgesehen sein.

Die Gestaltung der Oberflächen des aktiven Lasermediums und/oder des passiven sättigbaren Absorbers bei der bevorzugten Ausführungsform hat dabei zum einen die Funktion, die für die einzustellende Stabilität des Laserresonators notwendige geometrische Variabilität der Modenausbildung zu bestimmen.

Zum anderen soll eine transversale Variabilität des passiven sättigbaren Absorbers dahingehend gewährleistet werden, dass eine sichere Ausbildung einer TEM₀₀-Mode in einem ersten Schritt erfolgen kann. Mit einer der zeitlichen Entwicklung des Plasmakernes entsprechenden Verzögerung kann dann eine energiereichere Strahlung mit einer Modenstruktur höherer transversaler Ordnung mit dem Ziel erzeugt werden, durch effizientere Einkopplung des Laserlichts und des Vermeidens von zeitlichen oder räumlichen Passageverlusten eine gesteigerte Aufheizung des Plasmas auf die für eine sichere Zündung eines Kraftstoff-Luft-Gemisches notwendigen Temperaturen zu gewährleisten.

Die Ausbildung von sequentiellen Pulsen durch das Anschwingen unterschiedlicher Moden und das daraus resultierende unterschiedliche zeitliche Verhalten des sättigbaren Absorbers zielt speziell darauf ab, die für eine ideale Fokussierbarkeit notwendige TEM₀₀-Mode im Lasermedium gezielt zuerst zur Ausbildung anzuregen, um die Plasmabildung im Laserfokus zu gewährleisten. Danach sollen gezielt Moden höherer Ordnung zur Ausbildung angeregt werden, um ein weiteres Aufheizen des bereits gebildeten Plasmas zu ermöglichen. Die Ausbildung von Moden höherer transversaler Ordnungen ermöglicht dabei zusätzlich eine effizientere Ausnützung des gesamten Volumens des aktiven Lasermediums.

Für die optimale Ausnützung der Laserenergie der nachfolgenden Pulse soll der zeitliche Abstand (Delay), gerechnet zwischen dem Ende des vorhergehenden Pulses und dem Anfang des nachfolgenden Pulses, zwischen den Pulsen 10ns - 200 ns (Nanosekunden), vorzugsweise 30 ns - 70 ns betragen. Innerhalb dieses Delays koppelt die Strahlung nachfolgender Pulse effizient an das vorhandene Plasma des vorhergehenden Pulses an, ohne selbst die für die Plasmabildung notwendige hohe Schwellintensität erreichen zu müssen. Daher können auch schlecht fokussierbare Transversalmoden höherer Ordnung zur Plasmaaufheizung beitragen. Bei längeren Delays über 200 ns ist das Plasma so weit abgekühlt, dass die Laserstrahlung nicht mehr ankoppelt und durch das entstehende heiße Gasvolumen ohne Plasmabildung hindurchtritt. In diesem Fall ist die für die Plasmabildung notwendige Schwellintensität sogar höher als im Normalfall.

Die gezielte Ausbildung der TEM₀₀-Mode kann in der bevorzugten Ausführungsform (Teleskopresonator) durch die im Folgenden dargestellten konstruktiven Maßnahmen erreicht werden.

Durch die Ausbildung der gekrümmten Oberflächen des Lasermediums und des sättigbaren Absorbers wird ein Strahlengang im Laserresonator erzwungen, der dazu ist geeignet, die Stabilitätsbedingung der im Laserresonator umlaufenden Strahlung zu verändern. Dies wird durch geeignete Auswahl der Werte für die Krümmung und den Abstand der optischen Flächen, die das Teleskop bilden, erreicht. Die Stabilität des Laserresonator soll dabei so eingestellt werden, dass die Ausbildung von Strahlung in höheren transversalen Moden nicht unterdrückt wird, die prinzipielle Konfiguration des Laserresonators als hemispärisch stabiler Resonator jedoch die Ausbildung einer TEM₀₀-Mode erlaubt.

Um die Ausbildung der TEM₀₀-Mode gezielt vor der Ausbildung einer Modenstruktur höherer transversaler Ordnung zu erreichen, können Modifikationen am Lasermedium (Modulation der Verstärkung) und/oder am sättigbaren Absorber (Modulation der Verluste) vorgenommen werden:

In einer Ausführungsform wird das Lasermedium, so ausgebildet, dass durch Variation der Konzentration der laseraktiven Materialien die Absorption der Pumpstrahlung eine Anregungsenergieverteilung in der Art ausbildet, dass eine Anregung sowohl der TEM₀₀ -Grundmode als auch Moden höherer transversaler Ordnung gewährleistet ist. Folglich ist die Geometrie des Laseresonators so auszulegen, dass die Ausbildung sowohl der TEM₀₀ -Grundmode als auch von Moden höherer transversaler Ordnung gewährleistet ist.

In einer weiteren Ausführungsform wird der sättigbare Absorber dergestalt ausgebildet, dass die Anfangstransmission in den Bereichen, die durch die TEM₀₀-Mode überstrichen werden, höher gehalten wird, als in den Bereichen, die bei Ausbildung von Moden höherer transversaler Ordnung durchlaufen werden. Die erhöhte Anfangstransmission in diesen Raumbereichen kann durch spezielles Design des sättigbaren Absorbers erreicht werden, wie zum Beispiel durch eine Verringerung der optischen Weglänge im sättigbaren Absorber oder durch eine Verringerung der Konzentration der für die Funktion des sättigbaren Absorbers notwendigen Dotierungsionen in Form eines Gradientenprofiles. Hierdurch wird jeweils eine in transversaler Richtung variierende Sättigungsintensität des Absorbers erreicht.

Eine vereinfachte Möglichkeit, den Wirkungsquerschnitt im Absorber entlang der Radialkoordinate - also in transversaler Richtung - zu verändern, wird durch

Eine vereinfachte Möglichkeit, den Wirkungsquerschnitt im Absorber entlang der Radialkoordinate - also in transversaler Richtung - zu verändern, wird durch Ineinanderfügen von sättigbaren Absorbern mit unterschiedlicher Dotation erreicht (Stufenprofil). Lasermoden, die sich im äußeren Bereich des Absorbers ausbreiten, durchlaufen demnach räumliche Bereiche anderer Sättigungsintensität und schwingen daher zeitversetzt an.

Um die Zeitverzögerung der Abgabe des Laserlichts mit unterschiedlicher Modenstruktur, vorzugsweise zwischen den Pulsen auf ein für eine sichere Zündung notwendigen Abstand einzustellen, kann es notwendig sein, das Anschwingverhalten der Moden höherer transversaler Ordnung gezielt zeitlich zu steuern. Sollte daher die TEM₀₀-Mode zu früh im Vergleich zu höheren Moden anschwingen, ist die Ausbildung der Moden höherer transversaler Ordnung durch Modulation der Verstärkungs- bzw Verlustquerschnitte auch in Richtung auf leichteres Anschwingen relativ zur TEM₀₀-Mode zu ermöglichen. Je nach Pumpgeometrie und Anregungsenergieverteilung im Lasermedium kann es daher notwendig sein, die Verlustmechanismen im sättigbaren Absorber für die TEM₀₀-Mode zu erhöhen. Dies geschieht sinngemäß durch Verlängerung des optischen Weges im sättigbaren Absorber oder durch höhere Konzentration der Absorberionen im Zentrum bei konstanter Geometrie.

Eine weitere Möglichkeit, die Ausbildung von zeitlich versetzter Laserstrahlung mit unterschiedlicher transversaler Modenstruktur definiert anzuregen, besteht in der Verwendung von, insbesondere radial bzw. transversal, unterschiedlich hohen Reflektivitäten des Auskoppelspiegels. Solche Spiegel sind bei Laborlasern mit sog. instabilen Resonatoren im Einsatz. Sie weisen eine radial variierende Reflektivität auf, um entlang der optischen Achse ein Anschwingen des Lasers zu stimulieren. Varianten mit anderem Reflektivitätsverlauf und auf einer als stabiler Resonator ausgelegten Krümmung sind prinzipiell für die Erzeugung von Mehrfachpulsen geeignet und können nach dem Stand der Technik leichter hergestellt werden als inhomogene Dotierungseigenschaften der Kristalle.

Bei Vorliegen homogen dotierter Laserkristalle und sättigbarer Absorber von gleichmäßiger Dicke sowie gleichmäßig mit konstanter Reflektivität beschichteter Auskoppelspiegel ist eine Mehrfachpulsausbildung auch durch die inhomogene Verteilung des Pumplichtes erzielbar. Passiv gütegeschaltete Laser mit stabilen Resonatoren neigen zur alleinigen Ausbildung der TEM₀₀-Mode bzw. einem gleichzeitigen Anschwingen mehrerer Transversalmoden. Um die Ausbildung zeitlich versetzter Moden höherer Ordnung zu gewährleisten, kann die Pumplichtverteilung dergestalt inhomogen ausgebildet werden, dass durch den Einsatz geeigneter optischer Elemente im Strahlengang des Pumplasers nur die zum Anschwingen der TEM₀₀-Mode notwendige Energie entlang der optischen Achse eingekoppelt wird, ein erhöhter Anteil der Pumpenergie jedoch in das Volumen höherer Transversalmoden verteilt wird. Diese zusätzliche Optik erlaubt prinzipiell auch eine kontrollierte Verteilung der Pumpenergie und eröffnet eine Möglichkeit, den zeitlichen Abstand der Pulse zu kontrollieren. Eine inhomogene Lichtverteilung könnte alternativ auch durch mehrere verschieden stark leuchtende Pumplichtquellen oder Pumplichtleitfasern bereitgestellt werden. Natürlich kann zur Erzeugung des Laserlichts mit einer sich zeitlich verändernden transversalen Modenstruktur auch eine Kombination verschiedener der oben genannten Maßnahmen herangezogen werden.

Ein großer Vorteil der Variante der Laserlichterzeugungsvorrichtung, bei der das Laserlicht pulsweise abgegeben wird, liegt darin, dass erstens durch die Mehrpulsausbildung die Effizienz der Nutzung der Laserenergie deutlich erhöht wird (einem kurzen, gut fokussierbaren Puls zur Plasmaerzeugung folgt ein zweiter Puls, um den Energieinhalt des Plasmas zu erhöhen oder zumindest über einen längeren Zeitraum aufrechtzuerhalten), und zweitens durch die räumlich unterschiedliche Ausbreitung bzw. Form der Lasermoden das Plasma in seinem Volumen deutlich vergrößert werden soll, was besonders bei der Zündung von Magergemischen von Vorteil ist.

Zusätzlich kann ein Laser dieser Bauart auf den unerwünschten Effekt der Ablagerungen am verwendeten Brennraumfenster positiven Einfluss nehmen, da die Energiedichte am Fenster auf zwei oder mehrere Pulse aufgeteilt wird.

Beispielsweise könnte Laserlicht in den Brennraum des Verbrennungsmotors eingebracht werden, das in zeitlicher Abfolge eine TEM₀₀-Modenstruktur und eine TEM_{p=0,1=8}-Modenstruktur aufweist. Licht mit einer TEM_{p=0,1=8}-Modenstruktur weist annähernd die Struktur eines Hohlzylinders auf, wobei tangential mehrere Nullstellen vorhanden sind.

Schutz begehrt wird auch für ein Verfahren zur Zündung eines im Brennraum eines Verbrennungsmotors, insbesondere nach einem der Ansprüche 1 bis 11, befindlichen Kraftstoff-Luft-Gemisches durch das von einer Laserlichterzeugungsvorrichtung abgegebene Laserlicht, wobei die transversale Modenstruktur des Laserlichts zeitlich verändert wird.

Beispielsweise kann bei einem derartigen Verfahren vorgesehen sein, zuerst zur Erzeugung eines Plasmas im Kraftstoff-Luft-Gemisch Laserlicht mit einer TEM₀₀-Modenstruktur in den Brennraum einzubringen und anschließend zum Nachheizen des Plasmas Laserlicht mit einer Modenstruktur höherer transversaler Ordnung in den Brennraum einzubringen.

Weitere Vorteile und Einzelheiten der Verbindung ergeben sich anhand der nachfolgenden Figuren sowie der dazugehörigen Figurenbeschreibung. Dabei zeigen:
- Fig. 1a, 1b: zwei verschiedene Ausführungsformen des bei einem erfindungsgemäßen Verbrennungsmotor einzusetzenden Laserresonators,
- Fig. 2a-d: eine schematische Darstellung eines sättigbaren Absorbers, den Wirkungsquerschnitt des Absorbers in transversaler Richtung, die Intensität des abgegeben Laserlichts in Abhängigkeit von der Zeit und die räumliche Struktur des abgegeben Laserlichts in Abhängigkeit von der Zeit,
- Fig.3a-d: eine schematische Darstellung eines sättigbaren Absorbers, den Wirkungsquerschnitt des Absorbers in transversaler Richtung, die Intensität des abgegeben Laserlichts in Abhängigkeit von der Zeit und die räumliche Struktur des abgegeben Laserlichts in Abhängigkeit von der Zeit, für eine weitere Ausführungsform eines Absorbers,
- Fig. 4: ein Ausführungsbeispiel mit Korrekturoptik, um die Pumplichtverteilung dahingehend zu beeinflussen, dass für Moden höherer Ordnung ausreichend Pumplichtenergie zur Verfügung steht, um die Laserschwelle zu erreichen,
- Fig. 5a: eine Variante, bei der die Reflektivität der Oberflächenbeschichtung des Ausgangsspiegels dahingehend variiert, dass sowohl Pumplichtverteilung als auch Laserschwelle eine Mehrfachpulsausbildung ermöglichen,
- Fig. 5b: eine Darstellung zur variierenden Reflektivität der Oberflächenbeschichtung gemäß Fig. 5a und
- Fig. 6a,b: Ausführungsbeispiele eines erfindungsgemäßen Verbrennungsmotors.

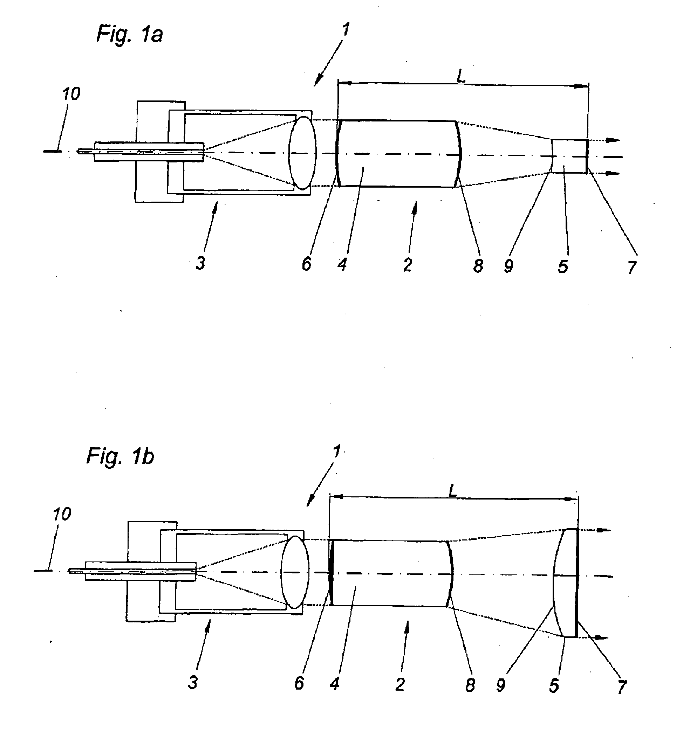

Fig. 1a zeigt ein Ausführungsbeispiel einer erfindungsgemäßen Laserlichterzeugungsvorrichtung 1 umfassend einen Laserresonator 2 der Länge L und eine Einkoppeloptik 3 für die Strahlung eines in Fig. 1 nicht dargestellten Pumplasers. Der Laserresonator 2 weist ein Lasermedium 4 sowie einen passiven sättigbaren Absorber 5 auf. Die optischen Oberflächen des Laserresonators 2 werden durch Oberflächen des Lasermediums 4 und des Absorbers 5 gebildet. So bilden die Oberflächen 6 und 7 die Spiegel des Laserresonators 2. Die Oberflächen 8 und 9 sind derart ausgebildet, dass sich der Strahlengang eines Teleskops ergibt, welcher in Fig. 1a mit einer Reduktion und in Fig. 1b mit einer Aufweitung des Strahldurchmessers verbunden ist.

In Fig. 1a wird das Lasermedium 4 durch über die Einkoppeloptik 3 eingekoppelte Strahlung homogen gepumpt. Der passive sättigbare Absorber 5 ist homogen dotiert. Der Absorber 5 ist dabei in transversaler Richtung derart ausgestaltet, dass die optische Weglänge mit zunehmendem Abstand von der optischen Achse 10 zunimmt. Mit anderen Worten weist der passive sättigbare Absorber 5 mit zunehmendem Abstand von der optischen Achse 10 mehr Substanz auf. Dies führt dazu, dass es im Bereich der optischen Achse 10, in welchem die TEM₀₀-Mode lokalisiert ist, zu einem früheren Durchbrechen kommt. In den Außenbereichen des sättigbaren Absorbers 5, in denen die Moden höherer transversaler Ordnung lokalisiert sind, kommt es hingegen zu einem späteren Durchbrechen. Dies führt insgesamt dazu, dass von der Laserlichterzeugungsvorrichtung 1 in zeitlicher Abfolge ein erster Puls mit einer TEM₀₀-Modenstruktur und ein zweiter Puls mit einer Modenstruktur höherer transversaler Ordnung abgegeben wird.

Die in Fig. 1b dargestellte Laserlichterzeugungsvorrichtung 1 unterscheidet sich von der Laserlichterzeugungsvorrichtung 1 der Fig. 1 a dadurch, dass zum einen die Oberflächen 8 und 9 derart ausgebildet sind, dass eine Aufweitung des Strahldurchmessers erfolgt und zum anderen der passive sättigbare Absorber 5 derart ausgebildet ist, dass mit zunehmendem Abstand von der optischen Achse 10 eine Verringerung der optischen Weglänge erfolgt. Mit anderen Worten weist der passive sättigbare Absorber 5 mit zunehmendem Abstand von der optischen Achse 10 weniger Substanz auf. Diese Maßnahme wurde getroffen, um eine zeitliche Verzögerung des Anschwingens der TEM₀₀-Mode zu erzielen, um den zeitlichen Abstand zwischen dem ersten Puls mit TEM₀₀-Modenstruktur und dem zweiten Puls mit einer Modenstruktur höherer transversaler Ordnung zu verringern.

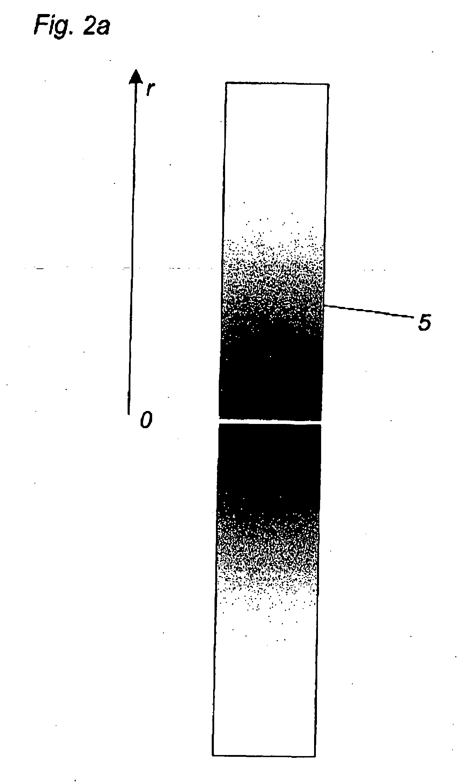

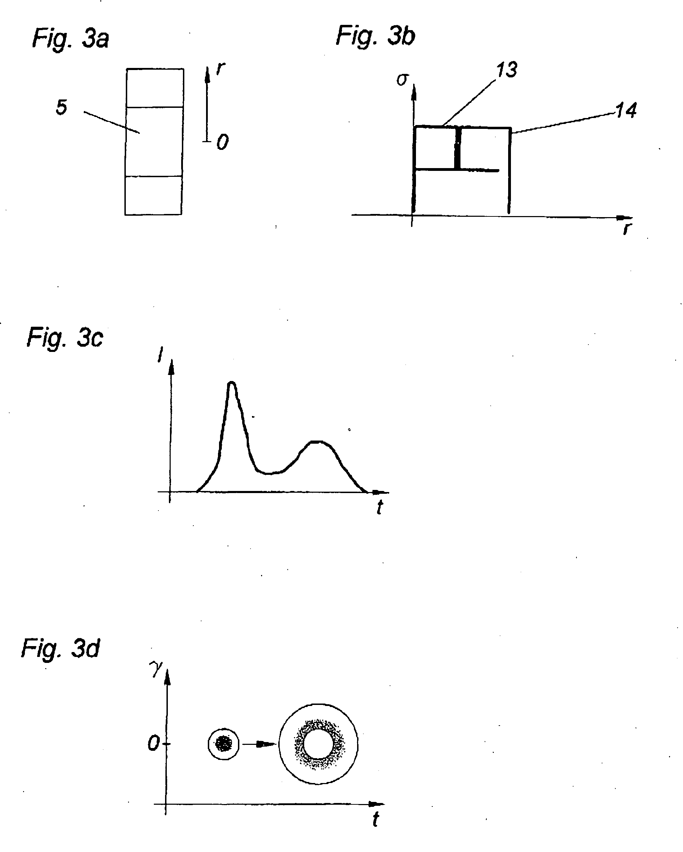

Alternativ zu der in Fig. 1a und 1b gewählten Maßnahme eines homogen dotierten passiven Absorbers 5 können auch Absorber 5 eingesetzt werden, welche eine in transversaler Richtung variierende Dotation aufweisen. Derartige Absorber sind in den Fig. 2a und 3a dargestellt.

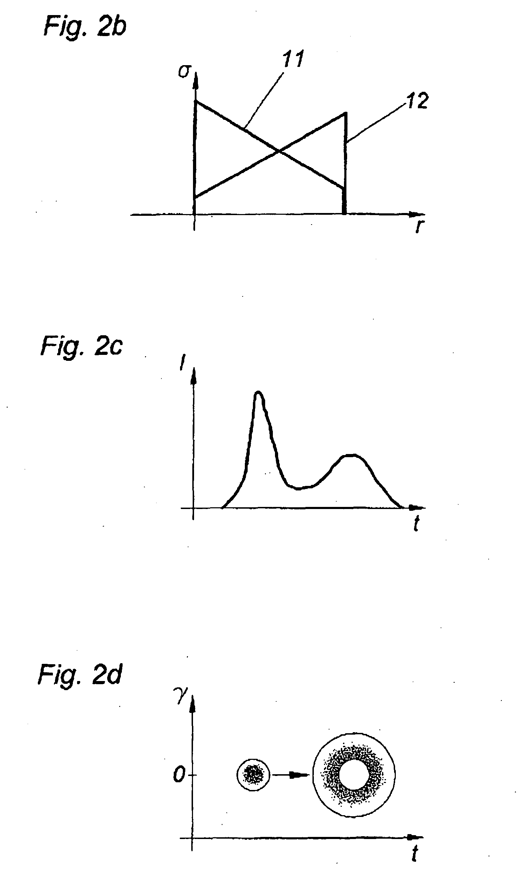

In Fig. 2a ist die Ionenkonzentration des sättigbaren Absorbers 5 mit zunehmendem Abstand r in einer ersten Ausführungsform abfallend (Kurve 11 in Fig. 2b) und in einer zweiten Ausführungsform (Kurve 12 in Fig. 2b) ansteigend ausgebildet. Die hierdurch entstehende Intensität bzw. räumliche Ausbildung der abgegebenen Laserstrahlung ist in den Fig. 2c und 2d dargestellt.

In Fig. 3a wurde ein Stufenprofil in der lonenkonzentration des sättigbaren Absorbers 5 gewählt. Es wurden sozusagen zwei homogen dotierte Materialien ineinander gesteckt. In einer ersten Ausführungsform wurde dabei eine im Zentrum des Absorbers 5 höhere lonenkonzentration (Kurve 13 in Fig. 3b) gewählt. In einer zweiten Ausführungsform wurde im Gegensatz dazu eine niedrigere lonenkonzentration gewählt (Kurve 14 in Fig. 3b). Die hierdurch entstehende Intensität bzw. räumliche Ausbildung der abgegebenen Laserstrahlung ist in den Fig. 3c und 3d dargestellt.

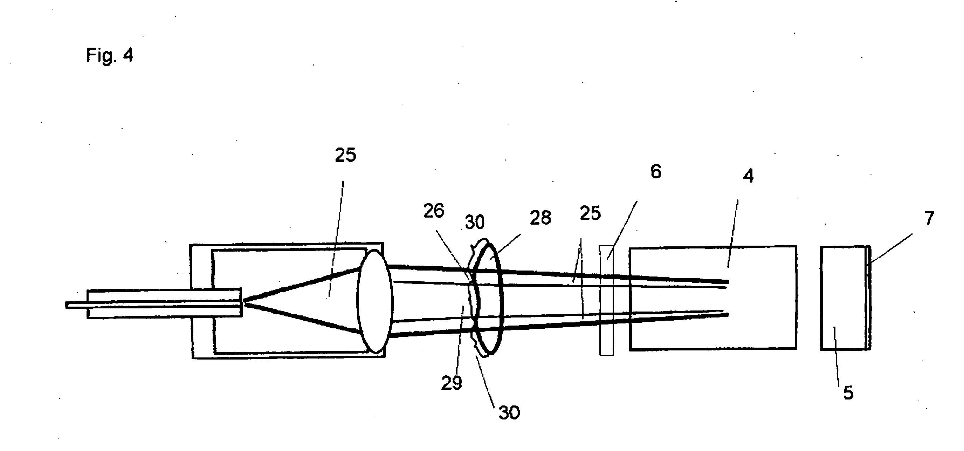

In Fig. 4 ist eine Variante der Pumplichteinkopplung dargestellt, in der eine Linse bzw. Korrekturoptik 28 mit Zusatzschliff 26 die Pumplichtverteilung 25 so verändert, dass die sonst typische Intensitätsspitze im Zentrum zugunsten der radial weiter außen liegenden Anteile, die in Raumbereiche höherer Transversalmoden eingekoppelt werden, verringert wird. Dabei sind unterschiedliche Ausführungsvarianten der Korrekturoptik möglich. In der dargestellten Form wirkt die Linse 28 im zentralen Bereich 29 strahlaufweitend und in den randlichen Bereichen 30 fokussierend, sodass das Pumplicht 25 im Effekt stärker auf die äußeren Bereiche des Lasermediums 4 konzentriert wird.

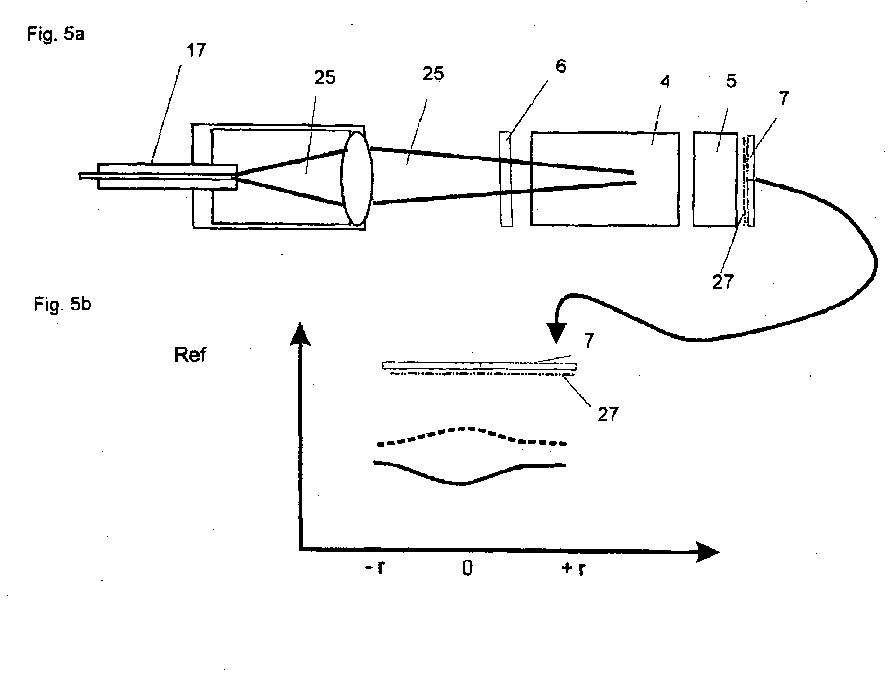

In Fig. 5a ist dargestellt, dass eine unterschiedliche Reflektivität der Beschichtung 27 des Auskoppelspiegels 7 der Laserlichterzeugungsvorrichtung 1 so gewählt werden kann, dass sich in räumlich unterschiedlichen Bereichen des Resonators unterschiedliche Laserschwellen ergeben.

Fig 5b zeigt, wie je nach Verteilung der Intensität des Pumplichtes eine Verringerung (gestrichelte Linie) oder eine Erhöhung (durchgezogene Linie) Reflexionsgrades (Ref) am Rand (-r, +r) gegenüber der optischen Achse (o) notwendig sein kann, um ein zeitlich versetztes Anschwingen des Lasers zu ermöglichen. Die radial sich ändernde Reflektivität (Ref) des Auskoppelspiegels 7 kann abgesehen von einer Beschichtung 27 natürlich auch anderweitig herbeigeführt werden.

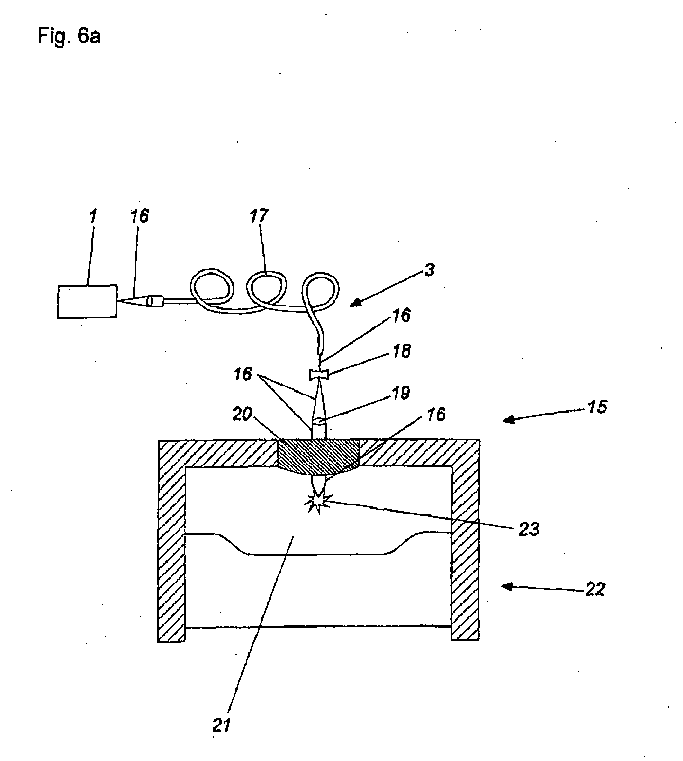

In Fig. 6a ist ein Verbrennungsmotor 15 mit einer erfindungsgemäßen Laserlichterzeugungsvorrichtung 1 dargestellt. Das von der Laserlichterzeugungsvorrichtung 1 abgegebene Laserlicht 16 wird über einen Lichtleiter 17, einer durch die Linsen 18 und 19 gebildeten Aufweiteoptik und ein Brennraumfenster 20 in den Brennraum 21 eines Zylinders 22 eingebracht. Das Brennraumfenster 20 ist dabei derart ausgebildet, dass das Laserlicht 16 im Brennraum 21 auf das Fokusvolumen 23 fokussiert wird.

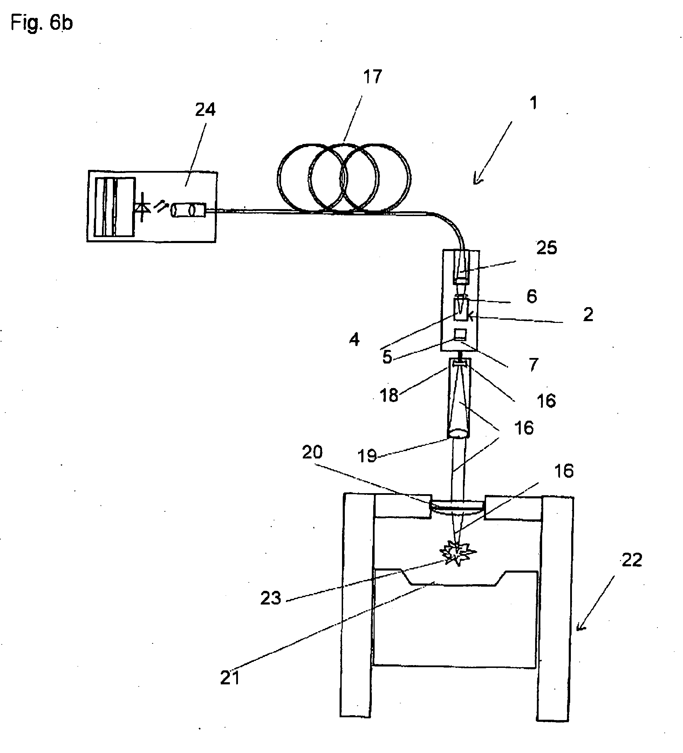

Die in Fig. 6b gezeigte Variante unterscheidet sich von der gemäß Fig. 6a, indem in Fig. 6b eine Pumplichtquelle 24 vorgesehen ist, welche über den Lichtleiter 17 die von ihr erzeugte Pumplaserstrahlung 25 in den das Lasermedium 4, den Absorber 5 und die Spiegel 6 und 7 aufweisenden Laserresonator 2 einkoppelt. Letzterer kann gemäß der Fig. 1 bis 5b ausgeführt sein.

## Patentansprüche

1. Verbrennungsmotor mit einer Laserlichterzeugungsvorrichtung, **dadurch gekennzeichnet, dass** die Laserlichterzeugungsvorrichtung (1) derart ausgebildet ist, dass sie dazu geeignet ist, Laserlicht (16) mit einer sich zeitlich verändernden transversalen Modenstruktur abzugeben.

2. Verbrennungsmotor nach Anspruch 1 mit einem Brennraum, in den ein Kraftstoff-Luft-Gemisch einbringbar ist, **dadurch gekennzeichnet, dass** die Laserlichterzeugungsvorrichtung (1) derart ausgebildet ist, dass sie dazu geeignet ist, Laserlicht (16) abzugeben, das in zeitlicher Abfolge eine TEM₀₀. Modenstruktur und eine Modenstruktur höherer transversaler Ordnung aufweist, wobei das eine TEM₀₀-Modenstruktur aufweisende Laserlicht (16) zur Erzeugung eines laserinduzierten Plasmas im Kraftstoff-Luft-Gemisch ausgebildet ist und wobei das eine Modenstruktur höherer transversaler Ordnung aufweisende Laserlicht (16) zum Nachheizen des Plasmas ausgebildet ist.

3. Verbrennungsmotor nach Anspruch 1 oder 2, **dadurch gekennzeichnet, dass** die Laserlichterzeugungsvorrichtung (1) einen Laserresonator (2) aufweist, der derart ausgebildet ist, dass er in Bezug auf wenigstens zwei Moden verschiedener transversaler Ordnung des abgebbaren Laserlichtes (16), vorzugsweise stabil, betreibbar ist.

4. Verbrennungsmotor nach Anspruch 3, **dadurch gekennzeichnet, dass** die optischen Oberflächen des Laserresonators (2) derart ausgebildet und zueinander angeordnet sind, dass der Strahldurchmesser eines in den Laserresonator (2) eingebrachten Lichtstrahls veränderbar ist.

5. Verbrennungsmotor nach Anspruch 3 oder 4, **dadurch gekennzeichnet, dass** im Laserresonator (2) ein Lasermedium (4) und ein passiver sättigbarer Absorber (5) angeordnet sind.

6. Verbrennungsmotor nach Anspruch 5, **dadurch gekennzeichnet, dass** jeweils eine Oberfläche (6, 7) des Lasermediums (4) und des Absorbers (5) derart ausgebildet und angeordnet ist, dass sie einen Spiegel des Laserresonators (2) bildet.

7. Verbrennungsmotor nach Anspruch 5 oder 6, **dadurch gekennzeichnet, dass** die optischen Oberflächen des Laserresonators (2) durch die Oberflächen (6, 7, 8, 9) des Lasermediums (4) und des Absorbers (5) gebildet werden.

8. Verbrennungsmotor nach einem der Ansprüche 5 bis 7, **dadurch gekennzeichnet, dass** der sättigbare Absorber (5) derart ausgebildet ist, dass er in transversaler Richtung (r) eine variierende Sättigungsintenstät aufweist.

9. Verbrennungsmotor nach Anspruch 8, **dadurch gekennzeichnet, dass** der sättigbare Absorber (5) derart ausgebildet ist, dass er in transversaler Richtung (r) wenigstens zwei Bereiche unterschiedlicher Sättigungsintensität aufweist.

10. Verbrennungsmotor nach Anspruch 8, **dadurch gekennzeichnet, dass** der sättigbare Absorber (5) in transversaler Richtung (r) eine variierende optische Weglänge aufweist.

11. Verbrennungsmotor nach Anspruch 8 oder 10, **dadurch gekennzeichnet, dass** der sättigbare Absorber (5) in transversaler Richtung (r) eine variierende Dotation aufweist.

12. Verbrennungsmotor nach einem der Ansprüche 3 bis 11, **dadurch gekennzeichnet, dass** die Laserlichterzeugungsvonichtung, vorzugsweise mittels einer Korrekturoptik (28), dazu geeignet ist, Pumplaserstrahlung (25) mit einer transversal inhomogenen Intensitätsverteilung in den Laserresonator (2) einzukoppeln.

13. Verbrennungsmotor nach einem der Ansprüche 3 bis 11, **dadurch gekennzeichnet, dass** der Laserresonator (2) einen Spiegel (6, 7), vorzugsweise einen Auskoppelspiegel (7), mit transversal inhomogener Reflektivität aufweist.

14. Verbrennungsmotor nach einem der Ansprüche 1 bis 13, **dadurch gekennzeichnet, dass** die Laserlichterzeugungsvorrichtung (1) dazu geeignet ist, zumindest zwei Laserlichtpulse mit unterschiedlicher transversaler Modenstruktur abzugeben, wobei zwischen zwei aufeinanderfolgenden Laserlichtpulsen, vorzugsweise zwischen dem ersten und zweiten Laserlichtpuls, ein zeitlicher Abstand zwischen 10 ns und 200 ns, vorzugsweise zwischen 30 ns und 70 ns, vorgesehen ist.

15. Verfahren zur Zündung eines im Brennraum eines Verbrennungsmotors nach einem der Ansprüche 1 bis 14 befindlichen Kraftstoff-Luft-Gemisches durch das von einer Laserlichterzeugungsvorrichtung abgegebene Laserlicht, **dadurch gekennzeichnet**, die transversale Modenstruktur des Laserlichts (16) zeitlich verändert wird.

16. Verfahren nach Anspruch 5, **dadurch gekennzeichnet, dass** zuerst zur Erzeugung eines Plasmas im Kraftstoff-Luft-Gemisch Laserlicht (16) mit einer TEM₀₀-Modenstruktur in den Brennraum (21) eingebracht wird und anschließend zum Nachheizen des Plasmas Laserlicht (16) mit einer Modenstruktur höherer transversaler Ordnung in den Brennraum (21) eingebracht wird.

## Claims

1. An internal combustion engine having a laser light generating device **characterised in that** the laser light generating device (1) is so designed that it is suitable for delivering laser light (16) with a transverse mode structure which varies in respect of time.

2. An internal combustion engine according to claim 1 having a combustion chamber into which a fuel-air mixture can be introduced, **characterised in that** the laser light generating device (1) is so designed that it is suitable for delivering laser light (16) which in temporal succession has a TEM₀₀-mode structure and a mode structure of higher transverse order, wherein the laser light (16) having a TEM₀₀-mode structure is adapted to generate a laser-induced plasma in the fuel-air mixture and wherein the laser light (16) having a mode structure of higher transverse order is adapted to post-heat the plasma.

3. An internal combustion engine according to claim 1 or claim 2 **characterised in that** the laser light generating device (1) has a laser resonator (2) which is so designed that it can be preferably stably operated in relation to at least two modes of different transverse order of the laser light (16) which can be delivered.

4. An internal combustion engine according to claim 3 **characterised in that** the optical surfaces of the laser resonator (2) are of such a configuration and are so arranged relative to each other that the beam diameter of a light beam introduced into the laser resonator (2) is variable.

5. An internal combustion engine according to claim 3 or claim 4 **characterised in that** a laser medium (4) and a passive saturatable absorber (5) are arranged in the laser resonator (2).

6. An internal combustion engine according to claim 5 **characterised in that** a respective surface (6, 7) of the laser medium (4) and of the absorber (5) are of such a configuration and arrangement that it forms a mirror of the laser resonator (2).

7. An internal combustion engine according to claim 5 or claim 6 **characterised in that** the optical surfaces of the laser resonator (2) are formed by the surfaces (6, 7, 8, 9) of the laser medium (4) and the absorber (5).

8. An internal combustion engine according to one of claims 5 to 7 **characterised in that** the saturatable absorber (5) is of such a configuration that it has a varying saturation intensity in the transverse direction (r).

9. An internal combustion engine according to claim 8 **characterised in that** the saturatable absorber (5) is of such a configuration that it has at least two regions of differing saturation intensity in the transverse direction (r).

10. An internal combustion engine according to claim 8 **characterised in that** the saturatable absorber (5) has a varying optical path length in the transverse direction (r).

11. An internal combustion engine according to claim 8 or claim 10 **characterised in that** the saturatable absorber (5) has a varying doping in the transverse direction (r).

12. An internal combustion engine according to one of claims 3 to 11 **characterised in that** the laser light generating device is suitable preferably by means of a correction optical system (28), for coupling pump laser radiation (25) with a transversely non-homogeneous intensity distribution into the laser resonator (2).

13. An internal combustion engine according to one of claims 3 to 11 **characterised in that** the laser resonator (2) has a mirror (6, 7), preferably a coupling-out mirror, with transversely non-homogeneous reflectivity.

14. An internal combustion engine according to one of claims 1 to 13 **characterised in that** the laser light generating device (1) is suitable for delivering at least two laser light pulses with differing transverse mode structure, wherein a time spacing of between 10 ns and 200 ns, preferably between 30 ns and 70 ns, is provided between two successive laser light pulses, preferably between the first and second laser light pulses.

15. A method of igniting a fuel-air mixture in the combustion chamber of an internal combustion engine according to one of claims 1 to 14 by laser light delivered by a laser light generating device, **characterised in that** the transverse mode structure of the laser light (16) is varied in respect of time.

16. A method according to claim 15 **characterised in that** firstly laser light (16) with a TEM₀₀-mode structure is introduced into the combustion chamber (21) to produce a plasma in the fuel-air mixture and then laser light (16) with a mode structure of higher transverse order is introduced into the combustion chamber (21) for post-heating of the plasma.

## Revendications

1. Moteur à combustion comportant un dispositif de production de lumière laser, **caractérisé en ce que** le dispositif de production de lumière laser (1) est conçu de telle sorte qu'il est apte à émettre une lumière laser (16) avec une structure modale transverse se modifiant en fonction du temps.

2. Moteur à combustion selon la revendication 1, avec une chambre de combustion, dans laquelle peut être introduit un mélange carburant/air, **caractérisé en ce que** le dispositif de production de lumière laser (1) est conçu de telle sorte qu'il est apte à émettre une lumière laser (16) qui comporte, dans une succession chronologique, une structure modale TEM₀₀ et une structure modale d'ordre transverse plus élevé, la lumière laser (16) à structure modale TEM₀₀ étant conçue pour générer un plasma induit par laser dans le mélange carburant/air et la lumière laser (16) à structure modale d'ordre transverse plus élevé étant conçue pour continuer à chauffer le plasma.

3. Moteur à combustion selon la revendication 1 ou 2, **caractérisé en ce que** le dispositif de production de lumière laser (1) comporte un résonateur laser (2) qui est conçu de telle sorte qu'il peut être exploité de préférence de manière stable par rapport auxdits au moins deux modes d'ordre transverse différent de la lumière laser (16) émise.

4. Moteur à combustion selon la revendication 3, **caractérisé en ce que** les surfaces optiques du résonateur laser (2) sont conçues et agencées les unes par rapport aux autres de telle sorte que le diamètre d'un rayon lumineux introduit dans le résonateur laser (2) est variable.

5. Moteur à combustion selon la revendication 3 ou 4, **caractérisé en ce qu'**un milieu laser (4) et un absorbeur (5) saturable passif sont disposés dans le résonateur laser (2).

6. Moteur à combustion selon la revendication 5, **caractérisé en ce qu'**une surface (6, 7) respective du milieu laser (4) et de l'absorbeur (5) est conçue et disposée de telle sorte qu'elle forme un miroir du résonateur laser (2).

7. Moteur à combustion selon la revendication 5 ou 6, **caractérisé en ce que** les surfaces optiques du résonateur laser (2) sont formées par les surfaces (6, 7, 8, 9) du milieu laser (4) et de l'absorbeur (5).

8. Moteur à combustion selon l'une quelconque des revendications 5 à 7, **caractérisé en ce que** l'absorbeur (5) saturable est conçu de telle sorte qu'il comporte, dans la direction transverse (r), une intensité de saturation variable.

9. Moteur à combustion selon la revendication 8, **caractérisé en ce que** l'absorbeur (5) saturable est conçu de telle sorte qu'il comporte, dans la direction transverse (r), au moins deux zones avec une intensité de saturation différente.

10. Moteur à combustion selon la revendication 8, **caractérisé en ce que** l'absorbeur (5) saturable comporte, dans la direction transverse (r), une longueur de trajectoire optique variable.

11. Moteur à combustion selon la revendication 8 ou 10, **caractérisé en ce que** l'absorbeur (5) saturable comporte, dans la direction transverse (r), un dopage variable.

12. Moteur à combustion selon l'une quelconque des revendications 3 à 11, **caractérisé en ce que** le dispositif de production de lumière laser, de préférence au moyen d'une optique de correction (28), est apte à injecter dans le résonateur laser (2) un rayon laser de pompage (25) avec une répartition d'intensité transversalement inhomogène.

13. Moteur à combustion selon l'une quelconque des revendications 3 à 11, **caractérisé en ce que** le résonateur laser (2) comporte un miroir (6, 7), de préférence un miroir de sortie (7) avec une réflectivité transversalement inhomogène.

14. Moteur à combustion selon l'une quelconque des revendications 1 à 13, **caractérisé en ce que** le dispositif de production de lumière laser (1) est apte à émettre au moins deux impulsions de lumière laser avec une structure modale transverse différente, sachant qu'entre deux impulsions de lumière laser successives de préférence entre la première et la deuxième impulsion de lumière laser, il est prévu un écart de temps entre 10 ns et 200 ns, de préférence entre 30 ns et 70 ns.

15. Procédé pour l'allumage d'un mélange carburant/air, contenu dans la chambre de combustion d'un moteur à combustion selon l'une quelconque des revendications 1 à 14, au moyen de la lumière laser émise par un dispositif de production de lumière laser, **caractérisé en ce que** la structure modale transverse de la lumière laser (16) est modifiée en fonction du temps.

16. Procédé selon la revendication 15, **caractérisé en ce que**, tout d'abord, une lumière laser (16) à structure modale TEM₀₀ est introduite dans la chambre de combustion (21) pour générer un plasma dans le mélange carburant/air, et, ensuite, une lumière laser (16) à structure modale d'ordre transverse plus élevé est introduite dans la chambre de combustion (21) pour continuer à chauffer le plasma.
